Europäisches Patentamt

European Patent Office

Office européen des brevets

(19)

(11) EP 1 593 719 A1

(12) EUROPEAN PATENT APPLICATION

(43) Date of publication:
09.11.2005 Bulletin 2005/45

(51) Int Cl.$^7$: C09D 11/00

(21) Application number: 05102371.1

(22) Date of filing: 24.03.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 06.05.2004 EP 04101968

(71) Applicant: AGFA-GEVAERT
2640 Mortsel (BE)

(72) Inventors:
• DE VOEGHT, Frank AGFA-GEVAERT
  2640 Mortsel (BE)
• MAHY, Marc AGFA-GEVAERT
  2640 Mortsel (BE)
• DEROOVER, Geert AGFA-GEVAERT
  2640 Mortsel (BE)
• CLAES, Roland AGFA-GEVAERT
  2640 Mortsel (BE)

(54) **Multi-density ink-jet set for ink-jet printing.**

(57)    A multi-density ink-jet ink set comprising two black ink compositions and at least three colour inks, wherein the first black ink composition has a lightness L* in the range of 35 to 65 as calculated from the spectral transmittance of a 1000-fold dilution of the first black ink composition, and the second black ink composition has an lightness L* value in the range of 70 to 100 as calculated from the spectral transmittance of a 1000-fold dilution of the second black ink composition.

A method for ink-jet printing is also disclosed.

EP 1 593 719 A1

**Description**

**Technical field**

The present invention relates to ink compositions for ink-jet printing, more specifically to multi-density ink-jet ink sets.

**Background art**

In ink-jet printing tiny drops of ink fluid are projected directly onto an ink-receiver surface without physical contact between the printing device and the ink-receiver. The printing device stores the printing data electronically and controls a mechanism for ejecting the ink drops image-wise onto the ink-receiver. Printing can be accomplished by moving a print head across the ink-receiver or vice versa. Early patents on ink-jet printers include US 3739393 (MEAD CORP), US 3805273 (MEAD CORP) and US 3891121 (MEAD CORP).

The jetting of the ink droplets can be performed in several different ways. In a first type of process called continuous ink-jet printing, the ink stream jetted from an orifice of the print head is broken up, by applying a pressure wave pattern to this orifice, into ink droplets of uniform size and spacing, which can be electrostatically charged or not as desired. In one embodiment the charged drops are deflected by an electric field into a gutter for recuperation, while the uncharged drops are undeflected and land on the ink-receiver to form an image. In an alternative embodiment it is the charged droplets which land on the ink-receiver to form an image and it is the uncharged droplets which are recuperated.

According to a second process the ink droplets can be created by a "drop on demand" method (DOD). A drop-on-demand device ejects ink droplets only when they are needed for imaging on the ink-receiver, thereby avoiding the complexity of drop charging, deflection hardware, and ink collection. In drop-on-demand ink-jet printing, the ink droplet can be formed by means of a pressure wave created by a mechanical motion of a piezoelectric transducer (so-called "piezo method"), or by means of discrete thermal pushes (so-called "bubble jet" method, or "thermal jet" method).

It will be readily understood that the optimal composition of an ink is dependent on the ink jetting method used and on the nature of the ink-receiver to be printed.

The ink compositions can be roughly divided into:

- water based, the drying mechanism involving absorption, penetration and evaporation;
- oil based, the drying involving absorption and penetration;
- solvent based, the drying mechanism involving primarily evaporation;
- hot melt or phase change, in which the ink is liquid at the ejection temperature but solid at room temperature and wherein drying is replaced by solidification;
- UV-curable, in which drying is replaced by polymerization.

In most applications of ink-jet printing the printed image is the final product at the disposal of the end-user. This is for instance the case in the so-called proofing application, wherein a customer desires a preview of the images before being printed on large scale by a printing press. Several proofing technologies are available, but ink-jet is becoming the most preferred choice of technology due to advantages in speed, cost and true reproduction of the image as printed by a printing press. This true reproduction of the image is realized by using a multi-density ink-jet ink set. A multi-density ink-jet ink set uses combinations of ink-jet inks with about the same hue but different chroma and lightness. These ink-jet inks are made by using the same colorants at different concentrations or using different colorants with about the same hue.

An example of such a multi-density ink-jet ink set is given by US 6670409 (SEIKO EPSON), which discloses an ink-jet recording ink set comprising light color inks of a plurality of colors, each of the light color inks having at least a pigment, water and a fine polymer particle; and dark color inks of a plurality of colors, each of the dark color inks having at least a pigment and water, wherein each of the dark color inks either does not contain a fine polymer particle or contains a fine polymer particle in smaller quantity than any of said light color inks. In US 6670409 (SEIKO EPSON) the ink-jet recording ink set is used for a system that does not require the operation of changing the ink to match the recording media to be used. When this ink set is used for printing on ordinary paper, the four colors of the dark color inks are used, while, for special paper, the three colors of the light color inks are used, with a composite black made from the three colors of the light color inks used for the black color.

EP 1176177 A (SEIKO EPSON) discloses an ink set comprising a first black ink composition and a second black ink composition, wherein the first black ink composition has a lightness (L*) in the range of 1 to 30 as calculated from the spectral transmittance of a 1000-fold dilution of said first black ink composition, and the second black ink composition has an L* value in the range of 35 to 80 as calculated from the spectral transmittance of a 1000-fold dilution of said second black ink composition and contains a specific colorant. By using these two black ink compositions a gradation pattern ranging from black to white can be printed exhibiting improved light-fastness and reduced graininess.

EP 1132441 A (SEIKO EPSON) discloses an ink set comprising a dye ink and a pigment ink in combination, wherein there are contained a plurality of inks having the same hue but different densities for at least one hue and at least one of the inks having a low density comprises a pigment incorporated therein as a colorant. **EP 1132441** A (SEIKO EPSON) shows that the combination of specific pigment ink (at least one of the light-coloured inks contains a pigment as a colorant) and dye inks makes it possible to provide a high image quality, a high rub fastness and a high light fastness at the same time.

**US 20030008938** (SEIKO EPSON) discloses an ink comprising a dark ink composition and a light ink composition that, while being mutually the same color, are of different color density, and is characterized in that the dark ink composition and the light ink composition each comprise a pigment as a colorant and a resin as a dispersant, in that the ratio between the resin weight proportion $B_1$ and the pigment weight proportion $P_1$ in the dark ink composition (i.e. $B_1/P_1$) is lower than the ratio between the resin weight proportion $B_2$ and the pigment weight proportion $P_2$ in the light ink composition (i.e. $B_2/P_2$), and in that $B_1$ and $B_2$ differ from each other. Again pigments are used as colorants to produce images with outstanding light resistance.

**US 20030226473** (SEIKO EPSON) discloses an ink set comprising at least a black ink composition containing a black pigment, and a light black ink composition containing the black pigment at a concentration less than the pigment concentration in the black ink composition, wherein the ratio of the pigment concentration in the black ink composition to the pigment concentration in the light black ink composition is in a range of 2 to 4.5. Colour differences of the recorded image due to differences in light source are reduced and the colour reproduction range in dark parts of an image is broadened, while maintaining high image quality with no worsening of the graininess in the dark parts.

The use of multi-density inks addressed and improved properties such as colour production and light-fastness, but simultaneously introduced new problems due to higher ink consumption by increasing the number of inks used for printing. Higher ink amounts led to problems of coalescence, bleeding and feathering of the ink.

Therefor, it would be highly desirable to have an ink-jet printing process using a multi-density ink-jet ink set having low ink consumption, and hence producing images free of image quality defects such as coalescence, bleeding and feathering.

Objects of the Invention

It is an object of the present invention to provide a multi-density ink-jet ink set with reduced ink consumption and faster drying time.

It is a further object of the present invention to provide a method for ink-jet printing producing images of high image quality exhibiting reduced coalescence, good colour reproduction and improved light-fastness.

Further objects of the invention will become apparent from the description hereinafter.

Summary of the Invention

It has been surprisingly found that producing colour with as much black inks as possible resulted in lower ink consumption and images exhibiting less fading. One would have expected otherwise since the black inks have a higher lightness due to a lower concentration of pigments and/or dyes.

Objects of the present invention have been realized with a multi-density ink-jet ink set comprising two black ink compositions and at least three colour inks, wherein the first black ink composition has a lightness L* in the range of 35 to 65 as calculated from the spectral transmittance of a 1000-fold dilution of said first black ink composition, and the second black ink composition has an lightness L* value in the range of 70 to 100 as calculated from the spectral transmittance of a 1000-fold dilution of said second black ink composition.

Objects of the present invention have also been realized by a method for ink-jet printing comprising the steps of:

(a) providing a multi-density ink-jet ink set as defined above
(b) jetting ink-jet inks of said multi-density ink-jet ink set on an ink-receiver.

Further advantages and embodiments of the present invention will become apparent from the following description.

**Disclosure of the invention**

Definitions

The term "ink-jet ink set", as used in disclosing the present invention, means a combination of two black inks and at least three colour inks, e.g. magenta ink (M), cyan ink (C) and yellow ink (Y).

The term "multi-density ink-jet ink set", as used in disclosing the present invention, means an ink-jet ink set as defined above comprising at least one combination of ink-jet inks with about the same hue but different chroma and lightness.

The term "dye", as used in disclosing the present invention, means a colouring agent having a solubility of 10 mg/L or more in the medium in which it is applied and under the ambient conditions pertaining.

The term "pigment" is defined in DIN 55943, herein incorporated by reference, as an inorganic or organic, chromatic or achromatic colouring agent that is practically insoluble in the application medium under the pertaining ambient conditions, hence having a solubility of less than 10 mg/L therein.

The term "filler", as used in disclosing the present invention, means an inorganic or organic material present in a layer of the ink-jet recording material to modify its properties, e.g. adhesion of a subbing layer to a polyester film, opacity of an ink-jet recording material and tribo-electrical properties.

The term "graininess" as used in disclosing the present invention, means a state in which dots of discharged ink can be visually identified in the recorded image.

The term "UV" is used in disclosing the present application as an abbreviation for ultraviolet radiation.

The term "ultraviolet radiation" as used in disclosing the present invention, means electromagnetic radiation in the wavelength range of 4 to 400 nanometers.

The term "actinic radiation" as used in disclosing the present invention, means electromagnetic radiation capable of initiating photochemical reactions.

The term "substantially non-absorbing ink-jet ink-receiver" means any ink-jet ink-receiver which fulfils at least one of the following two criteria:

1) No penetration of ink into the ink-jet ink-receiver deeper than 2 $\mu$m;

2) No more than 20% of a droplet of 100pL jetted onto the surface of the ink-jet ink-receiver disappears into the ink-jet ink-receiver in 5 seconds. If one or more coated layers are present, the dry thickness should be less than 5 $\mu$m. Standard analytical method can be used by one skilled in the art to determine whether an ink-receiver falls under either or both of the above criteria of a substantially non-absorbing ink-receiver. For example, after jetting ink on the ink-receiver surface, a slice of the ink-receiver can be taken and examined by transmission electron microscopy to determine if the penetration depth of the ink is greater than 2$\mu$m. Further information regarding suitable analytical methods can be found in the article: **DESIE, G, et al.** Influence of Substrate Properties in Drop on Demand Printing. *Proceedings of Imaging Science and Technology's 18th International Conference on Non Impact Printing.* 2002, p.360-365.

The term "alkyl" means all variants possible for each number of carbon atoms in the alkyl group i.e. for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl etc.

The term "acyl group" means -(C=O)-aryl and -(C=O)-alkyl groups.

The term "aliphatic group" means saturated straight chain, branched chain and alicyclic hydrocarbon groups.

The term "unsaturated aliphatic group" means straight chain, branched chain and alicyclic hydrocarbon groups which contain at least one double or triple bond.

The term "aromatic group" as used in disclosing the present invention means an assemblage of cyclic conjugated carbon atoms, which are characterized by large resonance energies, e.g. benzene, naphthalene and anthracene.

The term "alicyclic hydrocarbon group" means an assemblage of cyclic conjugated carbon atoms, which do not form an aromatic group, e.g. cyclohexane.

The term "substituted" as used in disclosing this present invention means that one or more of the carbon atoms and/or that a hydrogen atom of one or more of carbon atoms in an aliphatic group, an aromatic group or an alicyclic hydrocarbon group, are replaced by an oxygen atom, a nitrogen atom, a silicon atom, a sulphur atom, a phosphorous atom, selenium atom or a tellurium atom. Such substituents include hydroxyl groups, ether groups, carboxylic acid groups, ester groups, amide groups and amine groups.

The term "heteroaromatic group" means an aromatic group wherein at least one of the cyclic conjugated carbon atoms is replaced a nitrogen atom or a phosphorous atom.

The term "heterocyclic group" means an alicyclic hydrocarbon group wherein at least one of the cyclic conjugated carbon atoms is replaced by an oxygen atom, a nitrogen atom, a phosphorous atom, a silicon atom, a sulphur atom, a selenium atom or a tellurium atom.

Multi-density ink-jet ink set

Ink-jet printers can reproduce images using a multi-density ink-jet ink set. The colour of the image is controlled by the inks, which are regarded as independent variables. Each ink exhibits a range of colorant values. The number of inks is represented by n. The range of all colorant combinations, i.e. all possible combinations of colorant values from the inks in the multi-density ink-jet ink set, that can be sent to the printer is a hypercube in the n-dimensional space, referred to as the colorant space. However, in practice these combinations might be limited by the printing system itself. A typical example is the amount of ink that can practically be laid down on the ink-receiver.

Colour on the other hand is usually represented by three colour values. Typically colour spaces such as XYXZ or CieL*a*b* are used to represent colours as seen by the Human Visible System (HVS).

The relation between colorant values and colour values is represented by the printer model. The printer model is a transform from colorant space to colour space. The printer model is a colorant cube with possibly a number of ink limitations and is called the colour gamut. The characterization of the ink-jet printer is based on this printer model. As this is a rather complex operation, in most cases the printer is kept stable by modifying the colorant values sent to the printer in a much easier way, a step that is often referred to as calibration.

For multi-density inks, the inks are often combined in the calibration step. This means that the colorant value corresponding to a multi-density ink set is split by the calibration step into 2 or more multi-density ink values. To make a distinction between the colorant values before and after the calibration step, the values before are called global ink values or global colorant values, whereas the values after the calibration are simply referred to as ink values or colorant values. In general, the global colorant values are Cyan (C), Magenta (M), Yellow (Y) and Black (K). The global values for cyan and magenta are in most cases converted into two multi-density inks; i.e. a light and heavy cyan and magenta version. In a number of cases, multi-density ink sets have also been designed comprising a light black and a heavy black ink-jet ink.

Objects of the present invention have been realized by providing a multi-density ink-jet ink set comprising two black ink compositions and at least three colour inks, wherein the first black ink composition has a lightness L* in the range of 35 to 65 as calculated from the spectral transmittance of a 1000-fold dilution of said first black ink composition, and the second black ink composition has an lightness L* value in the range of 70 to 100 as calculated from the spectral transmittance of a 1000-fold dilution of said second black ink composition. The first black ink composition can be seen as a "light black" ink, while the second black ink is to be regarded as a "very light black" ink.

In a preferred embodiment the multi-density ink-jet ink set according to this invention includes seven inks, i. e. two multi-density cyan inks, two multi-density magenta inks, one yellow ink and two multi-density blacks.

Ink-jet Ink

The ink-jet inks of a multi-density ink-jet ink set according to the present invention contain at least one a pigment, at least one dye, or a combination thereof, to impart the desired colour to the ink. The pigment and/or dye may be present in the ink composition in any effective amount, generally from about 0.5 to about 20 percent by weight of the ink.

The ink-jet inks of a multi-density ink-jet ink set according to the present invention may contain at least one humectant to prevent the clogging of the nozzle, due to its ability to slow down the evaporation rate of ink.

The ink-jet inks of a multi-density ink-jet ink set according to the present invention may further include at least one surfactant. The surfactant can be anionic, cationic, non-ionic, or zwitter-ionic and added in a total amount below 20wt% based on the total ink weight.

A biocide may be added to the ink-jet inks of a multi-density ink-jet ink set according to the present invention to prevent unwanted microbial growth, which may occur in the ink-jet ink over time. The biocide may be used either singly or in combination.

The ink-jet inks of a multi-density ink-jet ink set according to the present invention may further comprise at least one thickener for viscosity regulation in the ink-jet ink.

The ink-jet inks of a multi-density ink-jet ink set according to the present invention may further comprise at least one antioxidant for improving the storage stability of an image.

The ink-jet inks of a multi-density ink-jet ink set according to the present invention may contain water and/or organic solvents, such as alcohols, fluorinated solvents and dipolar aprotic solvents. Preferable solvents are methanol, ethanol, propanol, 1-butanol, 1-pentanol, 2-butanol, t.-butanol, glycol, glycolethers, N-methylpyrrolidone, N,N-dimethylacetamid, N, N-dimethylformamid, 2,4-pentanedione and hexafluoroacetone are used.

In one embodiment the ink-jet inks of a multi-density ink-jet ink set according to the present invention are radiation curable ink-jet inks containing a radiation curable compound. The radiation curable compound can be selected from monomers and/or oligomers that can be polymerized by the curing means of the ink-jet printer.

The radiation curable ink-jet inks of a multi-density ink-jet ink set according to the present invention preferably further comprise at least one photo-initiator.

The radiation curable ink-jet inks of a multi-density ink-jet ink set according to the present invention preferably further comprise at least one inhibitor.

The ink-jet inks of a multi-density ink-jet ink set according to the present invention may include additives such as buffering agents, anti-mold agents, pH adjustment agents, electric conductivity adjustment agents, chelating agents, anti-rusting agents, light stabilizers, monomers, dendrimers, polymers, and the like. Such additives may be included in the ink-jet inks of a multi-density ink-jet ink set according to the present invention in any effective amount, as desired. Examples of pH controlling agents suitable for inks of the present invention include, but are not limited to, acids, and bases, including hydroxides of alkali metals such as lithium hydroxide, sodium hydroxide and potassium hydroxide. The amount included will depend, of course, on the specific component being included.

The ink-jet inks of a multi-density ink-jet ink set according to the present invention may further comprise conducting or semiconducting polymers, such as polyanilines, polypyrroles, polythiophenes such as poly(ethylenedioxythiophene) (PEDOT),substituted or unsubstituted poly(phenylenevinylenes) (PPV's) such as PPV and MEH-PPV, polyfluorenes such as PF6, etc.

Pigments

The pigment particles should be sufficiently small to permit free flow of the ink through the ink-jet printing device, especially at the ejecting nozzles which usually have a diameter ranging from 10 $\mu$m to 50 $\mu$m. The particle size influences also the pigment dispersion stability. It is also desirable to use small particles for maximum color strength.

The average particle diameter of the pigment should be between 0.005 $\mu$m and 15 $\mu$m. Preferably, the average pigment particle size is between 0.005 and 5 $\mu$m, more preferably between 0.005 and 1 $\mu$m, and particularly preferably between 0.005 and 0.3 $\mu$m. Larger pigment particle sizes may be used as long as the objectives of the present invention are achieved.

Very fine dispersions of pigments and methods for their preparation are disclosed in e.g. **EP 776952** A , **US 5538548**, **US 5443628**, **EP 259130** A , **US 5285064** , **EP 429828** A and **EP 526198** A.

The pigment can be black, cyan, magenta, yellow, red, blue, green, brown, mixtures thereof, and the like. For example, suitable pigment materials include carbon blacks such as Regal 400R, Mogul L, Elftex 320 from Cabot Co., or Carbon Black FW18, Special Black 250, Special Black 350, Special Black 550, Printex 25, Printex 35, Printex 55, Printex 150T from DEGUSSA Co., and Pigment Black 7. Additional examples of suitable pigments are disclosed in US 5389133 (XEROX).

Suitable pigments for the ink-jet inks of a multi-density ink-jet ink set according to the present invention include: C. I. Pigment Yellow 17, C. I. Pigment Blue 27, C. I. Pigment Red 49:2, C. I. Pigment Red 81:1, C. I. Pigment Red 81: 3, C. I. Pigment Red 81 :x, C. I. Pigment Yellow 83, C. I. Pigment Red 57:1, C. I. Pigment Red 49:1, C. I. Pigment Violet 23, C. I. Pigment Green 7, C. I. Pigment Blue 61, C. I. Pigment Red 48:1, C. I. Pigment Red 52:1, C. I. Pigment Violet 1, C. I. Pigment White 6, C. I. Pigment Blue 15, C. I. Pigment Yellow 12, C. I. Pigment Blue 56, C. I. Pigment Orange 5, C. I. Pigment Black 7, C. I. Pigment Yellow 14, C. I. Pigment Red 48:2, C. I. Pigment Blue 15:3, C. I. Pigment Yellow 1, C. I. Pigment Yellow 3, C. I. Pigment Yellow 13, C. I. Pigment Orange 16, C. I. Pigment Yellow 55, C. I. Pigment Red 41, C. I. Pigment Orange 34, C. I. Pigment Blue 62, C. I. Pigment Red 22, C. I. Pigment Red 170, C. I. Pigment Red 88, C. I. Pigment Yellow 151, C. I. Pigment Red 184, C. I. Pigment Blue 1:2, C. I. Pigment Red 3, C. I. Pigment Blue 15:1, C.I. Pigment Blue 15:3, C.I. Pigment Blue 15:4, C. I. Pigment Red 23, C. I. Pigment Red 112, C. I. Pigment Yellow 126, C. I. Pigment Red 169, C. I. Pigment Orange 13, C. I. Pigment Red 1-10, 12, C.I. Pigment Blue 1:X, C.I. Pigment Yellow 42, C.I. Pigment Red 101, C.I. Pigment Brown 6, C. I. Pigment Brown 7, C. I. Pigment Brown 7:X, C. I. Pigment Black 11, C. I. Pigment Metal 1, C. I. Pigment Metal 2, C.I. Pigment Yellow 128, C.I. Pigment Yellow 93, C.I. Pigment Yellow 74, C.I. Pigment Yellow 138, C.I. Pigment Yellow 139, C.I. Pigment Yellow 154, C. I. Pigment Yellow 185, C.I. Pigment Yellow 180, C.I. Pigment Red 122, C.I. Pigment Red 184, bridged aluminium phtalocyanine pigments and solid solutions of pigments.

Further the pigment may be chosen from those disclosed by **HERBST, W, et al.** Industrial Organic Pigments, Production, Properties, Applications. 2nd edition. vch, 1997.

Most preferred pigments are Pigment Yellow 1, 3, 128, 109, 93, 17, 14, 10, 12, 13, 83, 65, 75, 74, 73, 138, 139, 154, 151, 180, 185; Pigment Red 122, 22, 23, 17, 210, 170, 188, 185, 146, 144, 176, 57:1, 184, 202, 206, 207; Pigment Blue 15:3, Pigment Blue 15:2, Pigment Blue 15:1, Pigment Blue 15:4, Pigment Blue 15:6, Pigment Blue 16; carbon black.

The pigment may be added in the form of a dispersion comprising a dispersant also called a pigment stabilizer.

The latter may be, for example, of the polyester, polyurethane of polyacrylate type, especially in the form of high molecular weight block copolymer, and would typically be incorporated at 2.5% to 100% by weight of the pigment. Suitable examples are DISPERBYK™ dispersants available from BYK CHEMIE or SOLSPERSE™ dispersants available from ZENECA. A detailed list of non-polymeric as well as some polymeric dispersants is disclosed by **HERBST, W, et al.** Industrial Organic Pigments, Production, Properties, Applications. 2nd edition. vch, 1997.

Suitable pigment stabilizers are also disclosed in **DE 19636382** (BAYER), **US 5720802** (XEROX), **US 5713993** (DU PONT), **US 5085689** (BASF) and **US 2303376** (FUJITSU ISOTEC).

Dyes

Dyes suitable for the ink-jet ink according to the present invention include direct dyes, acidic dyes, basic dyes and reactive dyes.

Suitable direct dyes for the ink-jet ink according to the present invention include:

- C.I. Direct Yellow 1, 4, 8, 11, 12, 24, 26, 27, 28, 33, 39, 44, 50, 58, 85, 86, 100, 110, 120, 132, 142, and 144
- C.I. Direct Red 1, 2, 4, 9, 11, 134, 17, 20, 23, 24, 28, 31, 33, 37, 39, 44, 47, 48, 51, 62, 63, 75, 79, 80, 81, 83, 89, 90, 94, 95, 99, 220, 224, 227 and 343
- C.I. Direct Blue 1, 2, 6, 8, 15, 22, 25, 71, 76, 78, 80, 86, 87, 90, 98, 106, 108, 120, 123, 163, 165, 192, 193, 194, 195, 196, 199, 200, 201, 202, 203, 207, 236, and 237
- C.I. Direct Black 2, 3, 7, 17, 19, 22, 32, 38, 51, 56, 62, 71, 74, 75, 77, 105, 108, 112, 117, 154 and 195

Suitable acidic dyes for the ink-jet ink according to the present invention include:

- C.I. Acid Yellow 2, 3, 7, 17, 19, 23, 25, 20, 38, 42, 49, 59, 61, 72, and 99
- C.I. Acid Orange 56 and 64
- C.I. Acid Red 1, 8, 14, 18, 26, 32, 37, 42, 52, 57, 72, 74, 80, 87, 115, 119, 131, 133, 134, 143, 154, 186, 249, 254, and 256
- C.I. Acid Violet 11, 34, and 75
- C.I. Acid Blue 1, 7, 9, 29, 87, 126, 138, 171, 175, 183, 234, 236, and 249
- C.I. Acid Green 9, 12, 19, 27, and 41
- C.I. Acid Black 1, 2, 7, 24, 26, 48, 52, 58, 60, 94, 107, 109, 110, 119, 131, and 155

Suitable reactive dyes for the ink-jet ink according to the present invention include:

- C.I. Reactive Yellow 1, 2, 3, 14, 15, 17, 37, 42, 76, 95, 168, and 175
- C.I . Reactive Red 2, 6, 11, 21, 22, 23, 24, 33, 45, 111, 112, 114, 180, 218, 226, 228, and 235
- C.I. Reactive Blue 7, 14, 15, 18, 19, 21, 25, 38, 49, 72, 77, 176, 203, 220, 230, and 235
- C.I. Reactive Orange 5, 12, 13, 35, and 95
- C.I. Reactive Brown 7, 11, 33, 37, and 46
- C.I. Reactive Green 8 and 19
- C.I. Reactive Violet 2, 4, 6, 8, 21, 22, and 25
- C.I. Reactive Black 5, 8, 31, and 39

Suitable basic dyes for the ink-jet ink according to the present invention include:

- C.I. Basic Yellow 11, 14, 21, and 32
- C.I. Basic Red 1, 2, 9, 12, and 13
- C.I. Basic Violet 3, 7, and 14
- C.I. Basic Blue 3, 9, 24, and 25

Dyes can only manifest the ideal colour in an appropriate range of pH value. Therefore, the ink-jet ink of the present invention preferably further comprises a pH buffer, such as potassium hydroxide (KOH).

Humectants

Suitable humectants include triacetin, N-methyl-2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols; glycols, including propylene glycol, polypropylene glycol, ethylene glycol, polyethylene glycol, diethylene glycol, tetraethylene glycol, and mixtures and derivatives thereof. A preferred humectant is polyethylene glycol and added to the ink-jet ink formulation in an amount of 0.1 to 20 wt% of the formulation, more preferably 0.1 to 10 wt% of the formulation, and most preferably approximately 4.0 to 6.0 wt%.

Surfactants

Suitable surfactants include fatty acid salts, ester salts of a higher alcohol, alkylbenzene sulphonate salts, sulphosuccinate ester salts and phosphate ester salts of a higher alcohol (for example, sodium dodecylbenzenesulphonate and sodium dioctylsulphosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL™ 104, 440, 465 and TG available from AIR PRODUCTS & CHEMICALS INC.

Biocides

Suitable biocides for the ink-jet ink of the present invention include sodium dehydroacetate, 2-phenoxyethanol, sodium benzoate, sodium pyridinethion-1-oxide, ethyl p-hydroxybenzoate and 1,2-benzisothiazolin-3-one and salts thereof. A preferred biocide for the ink-jet ink of the present invention is Proxel™ GXL available from ZENECA COLOURS.

A biocide is preferably added in an amount of 0.001 to 3 wt.%, more preferably 0.01 to 1.00 wt. %, each based on the ink-jet ink.

Thickeners

Suitable thickeners for use in the ink-jet inks of a multi-density ink-jet ink set according to the present invention include urea or urea derivatives, hydroxyethylcellulose, carboxymethylcellulose, hydroxypropylcellulose, derived chitin, derived starch, carrageenan, and pullulan; DNA, proteins, poly(styrenesulphonic acid), poly(styrene-co-maleic anhydride), poly(alkyl vinyl ether-co-maleic anhydride), polyacrylamid, partially hydrolyzed polyacrylamid, poly(acrylic acid), poly(vinyl alcohol), partially hydrolyzed poly(vinyl acetate), poly(hydroxyethyl acrylate), poly(methyl vinyl ether), polyvinylpyrrolidone, poly(2-vinylpyridine), poly(4-vinylpyridine) and poly(diallyldimethylammonium chloride).

The thickener is added preferably in an amount of 0.01 to 20wt%, more preferably 0.1 to 10wt% based on the ink-jet ink.

Preferably the viscosity of the ink-jet inks of a multi-density ink-jet ink set according to the present invention are lower than 100 mPa.s, more preferably lower than 50 mPa.s, and most preferably lower than 30 mPa.s at a shear rate of 100 s$^{-1}$ and a temperature between 20 and 110°C.

Antioxidants

As the antioxidant for improving storage stability of an image, various organic and metal complex type fading preventives can be used in the invention. Organic fading preventives include hydroquinones, alkoxyphenols, dialkoxyphenols, phenols, anilines, amines, indanes, coumarones, alkoxyanilines and heterocycles, while metal complexes include nickel complexes and zinc complexes. More specifically, compounds as described in "Research Disclosure, No. 17643, VII, Section I or J, No. 15162, No. 18716, left column on page 650, No. 36544, page 527, No. 307105, page 872, and the patent cited in No. 15162, and compounds embraced in the formula of the typical compounds and compound examples described on pages 127 to 137 of JP 62215272 A (FUJI).

The stabilizer is added in an amount of 0.1 to 30wt%, preferably 1 to 10wt% based on the ink.

Monomers and Oligomers

Monomers and/or oligomers are polymerized by the curing means of the ink-jet printer. Monomers, oligomers or prepolymers may possess different degrees of functionality, and a mixture including combinations of mono-, di-, triand higher functionality monomers, oligomers or prepolymers may be used. These components are preferably UV curable.

Adjusting the ratio between the monomers and oligomers is also a method of adjusting the viscosity of the ink. A higher functionality results in a higher viscosity.

Any method of conventional radical polymerization, photo-curing system using photo acid or photo base generator, or photo induction alternating copolymerization may be employed. In general, radical polymerization and cationic polymerization are preferred, and photo induction alternating copolymerization needing no initiator may also be employed. Further, a hybrid system of combinations of these systems is also effective.

Radical polymerization is the most widely employed process. Cationic polymerization is however superior in effectiveness due to lack of inhibition of polymerization by oxygen, however it is slow and its cost is high. If cationic polymerization is used, it is preferred to use an epoxy compound .

Any polymerizable compound commonly known in the art may be employed. Particularly preferred for the ink-jet inks of a multi-density ink-jet ink set according to the present invention are monofunctional and/or polyfunctional acrylate monomers, oligomers or prepolymers, such as isoamyl acrylate, stearyl acrylate, lauryl acrylate, octyl acrylate, decyl acrylate, isoamylstyl acrylate, isostearyl acrylate, 2-ethylhexyl-diglycol acrylate, 2-hydroxybutyl acrylate, 2-acryloyloxyethylhexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, vinyl ether acrylate, 2-acryloyloxyethylsuccinic acid, 2-acryloxyethylphthalic acid, 2-acryloxyethyl-2-hydroxyethyl-phthalic acid, lactone modified flexible acrylate, and t-butylcyclohexyl acrylate, triethylene glycol diacrylate, tetraethylene glycol diacrylate, polyethylene glycol diacrylate,dipropylene glycol diacrylate, tripropylene glycol diacrylate, polypropylene glycol diacrylate, 1,4butanediol diacrylate, 1,6hexanediol diacrylate, 1,9nonanediol diacrylate, neopentyl glycol diacrylate, dimethyloltricyclodecane diacrylate, bisphenol A EO (ethylene oxide) adduct diacrylate, bisphenol A PO (propylene oxide) adduct diacrylate, hydroxypivalate neopentyl glycol diacrylate, propoxylated neopentyl glycol diacrylate, alkoxylated dimethyloltricyclodecane diacrylate and polytetramethylene glycol diacrylate, trimethylolpropane triacrylate, EO modified trimethylolpropane triacrylate, tri (propylene glycol) triacrylate, caprolactone modified trimethylolpropane triacrylate, pentaerythritol triacrylate, pentaerithritol tetraacrylate, pentaerythritolethoxy tetraacrylate, dipentaerythritol hexaacrylate, ditrimethylolpropane tetraacrylate, glycerinpropoxy triacrylate, and caprolactam modified dipentaerythritol hexaacrylate, or an N-vinylamide such as, N-vinylcaprolactam or N-vinylformamide ; or acrylamide or a substituted acrylamide, such as acryloylmorpholine.

Furthermore, methacrylates corresponding to the above-mentioned acrylates may be used with these acrylates. Of the methacrylates, methoxypolyethylene glycol methacrylate, methoxytriethylene glycol methacrylate, hydroxyethyl methacrylate, phenoxyethyl methacrylate, cyclohexyl methacrylate, tetraethylene glycol dimethacrylate, and polyethylene glycol dimethacrylate are preferred due to their relatively high sensitivity and improved adhesion to an ink-receiver surface.

Furthermore, the ink-jet inks may also contain polymerizable oligomers. Examples of these polymerizable oligomers include epoxy acrylates, aliphatic urethane acrylates, aromatic urethane acrylates, polyester acrylates, and straight-chained acrylic oligomers.

Photo-initiators

A catalyst called a photo-initiator typically initiates the polymerization reaction. The photo-initiator requires less energy to activate than the monomers and oligomers to form the polymer.

The photo-initiator absorbs light and is responsible for the production of free radicals or cations. Free radicals or cations are high-energy species that induce polymerization of monomers, oligomers and polymers and with polyfunctional monomers and oligomers thereby also inducing crosslinking.

A preferred amount of photo-initiator is 1 to 10 wt% of the total ink weight, and more preferably 1 to 6 wt% of the total ink weight.

Irradiation with actinic radiation may be realized in two steps by changing wavelength or intensity. In such cases it is preferred to use two types of photo-initiator together.

Photo-initiators are necessary for free radical curing and may include, but are not limited to, the following compounds or combinations thereof: benzophenone and substituted benzophenones, 1-hydroxycyclohexyl phenyl ketone, thioxanthones such as isopropylthioxanthone,2-hydroxy-2-methyl-1-phenylpropan-1-one, 2-benzyl-2-dimethylamino- (4-morpholinophenyl) butan-1-one, benzil dimethylketal, bis (2,6-dimethylbenzoyl) -2,4, 4-trimethylpentylphosphine oxide, 2,4,6trimethylbenzoyldiphenylphosphine oxide, 2-methyl-1- [4-(methylthio)phenyl] -2-morpholinopropan-1-one, 2,2-dimethoxy-1, 2-diphenylethan-1-one or 5,7-diiodo-3- butoxy-6-fluorone, diphenyliodonium fluoride and triphenylsulfonium hexafluophosphate.

Suitable photo-initiators for use in the radiation curable ink-jet inks of a multi-density ink-jet ink set according to the present invention include Irgacure™ 184, Irgacure™ 500, Irgacure™ 907, Irgacure™ 369, Irgacure™ 1700, Irgacure™ 651, Irgacure™ 819, Irgacure™ 1000, Irgacure™ 1300, Irgacure™ 1870, Darocur™ 1173, Darocur™ 4265 and Darocur™ ITX available from CIBA SPECIALTY CHEMICALS, Lucerin TPO available from BASF AG, Esacure™ KT046, Esacure™ KIP150, Esacure™ KT37 and Esacure™ EDB available from LAMBERTI, H-Nu™ 470 and H-Nu™ 470X available from SPECTRA GROUP Ltd. and isopropyl-thioxanthone.

Inhibitors

Suitable polymerization inhibitors include phenol type antioxidants, hindered amine light stabilizers, phosphor type antioxidants, hydroquinonemonomethyl ether commonly used in (metha)acrylate monomers, and hydroquinone, t-butylcatechol, pyrogallol may also be used. Of these, a phenol compound having a double bond in molecules derived from acrylic acid is particularly preferred due to its having a polymerization-restraining effect even when heated in a closed, oxygen-free environment. Suitable inhibitors are, for example, Sumilizer™ GA-80, Sumilizer™ GM and Sumilizer™ GS produced by Sumitomo Chemical Co., Ltd.

Since excessive addition of these polymerization inhibitors will lower the ink sensitivity to curing, it is preferred that the amount capable of preventing polymerization be determined prior to blending. The amount of a polymerization inhibitor is generally between 200 and 20,000 ppm of the total ink weight.

Suitable combinations of compounds which decrease oxygen polymerization inhibition with radical polymerization inhibitors are: 2-benzyl-2-dimethylamino-1-(4-morpholinophenyl)-butane-1 and 1-hydroxy-cyclohexyl-phenyl-ketone; 1-hydroxy-cyclohexyl-phenyl-ketone and benzophenone; 2-methyl-1[4-(methylthio)phenyl]-2-morpholinopropane-1-on or 2-methyl-1 [4-(methylthio)phenyl]-2-morpholinopropane-1-on and diethyltuioxanthone or isopropylthioxanthone; and benzophenone and acrylate derivatives having a tertiary amino group, and addition of tertiary amines. An amine compound is commonly employed to decrease an oxygen polymerization inhibition or to increase sensitivity. However, when an amine compound is used in combination with a high acid value compound, the storage stability at high temperature tends to be decreased. Therefore, specifically, the use of an amine compound with a high acid value compound in ink-jet printing should be avoided.

Synergist additives may be used to improve the curing quality and to diminish the influence of the oxygen inhibition. Such additives include, but are not limited to ACTILANE™ 800 and ACTILANE™ 725 available from AKZO NOBEL, Ebecryl™ P115 and Ebecryl™ 350 available from UCB CHEMICALS and CD 1012, Craynor CN 386 (amine modified acrylate) and Craynor CN 501 (amine modified ethoxylated trimethylolpropane triacrylate) available from CRAY VALLEY.

The content of the synergist additive is in the range of 0 to 50wt%, preferably in the range 5 to 35wt% based on the total weight of the radiation curable ink-jet ink.

Solvents

The ink-jet inks of a multi-density ink-jet ink set according to the present invention may contain as a solvent, water and/or organic solvents, such as alcohols, fluorinated solvents and dipolar aprotic solvents. Preferably the ink-jet inks contain a solvent in a concentration between 10 and 80wt%, particularly preferably between 20 and 50wt%, each based on the total weight of the ink-jet ink.

Radiation curable ink-jet inks of a multi-density ink-jet ink set according to the present invention preferably consist of 100% solids. Sometimes, it can be advantageous to add an extremely small amount of an organic solvent to improve adhesion to the ink-receiver surface after UV curing. In this case, the added solvent can be any amount in the range which does not cause problems of solvent resistance and VOC, and preferably 0.1-5.0wt%, and particularly preferably 0.1-3.0wt%, each based on the total weight of the radiation curable ink-jet ink.

Suitable organic solvents include alcohol, aromatic hydrocarbons, ketones, esters, aliphatic hydrocarbons, higher fatty acids, carbitols, cellosolves, higher fatty acid esters. Suitable alcohols include, methanol, ethanol, propanol and 1-butanol, 1-pentanol, 2-butanol, t.-butanol. Suitable aromatic hydrocarbons include toluene, and xylene. Suitable ketones include methyl ethyl ketone, methyl isobutyl ketone, 2,4-pentanedione and hexafluoroacetone. Also glycol, glycolethers, N-methylpyrrolidone, N,N-dimethylacetamid, N, N-dimethylformamid may be used.

Ink-receiving material

The ink-jet receiving material to be used with the ink-jet inks of a multi-density ink-jet ink set according to the present invention comprise a support and one or more ink-receiving layers. An ink-receiving layer comprises at least one binder. Preferably, the ink-receiving layer is porous and contains a binder and a filler.

The binder can be chosen from a list of compounds well-known in the art including hydroxyethyl cellulose; hydroxypropyl cellulose; hydroxyethylmethyl cellulose; hydroxypropyl methyl cellulose; hydroxybutylmethyl cellulose; methyl cellulose; sodium carboxymethyl cellulose; sodium carboxymethylhydroxethyl cellulose; water soluble ethylhydroxyethyl cellulose; cellulose sulphate; polyvinyl alcohol; vinylalcohol copolymers; polyvinyl acetate; polyvinyl acetal; polyvinyl pyrrolidone; polyacrylamide; acrylamid/acrylic acid copolymer; polystyrene, styrene copolymers; acrylic or methacrylic polymers; styrene/acrylic copolymers; ethylene-vinylacetate copolymer; vinylmethyl ether/maleic acid copolymer; poly(2-acrylamido-2-methyl propane sulphonic acid); poly(diethylene triamine-co-adipic acid); polyvinyl pyridine; polyvinyl imidazole; polyethylene imine epichlorohydrin modified; polyethylene imine ethoxylated; polyethylene oxide; polyurethane; melamine resins; gelatin; carrageenan; dextran; gum arabic; casein; pectin; albumin; starch; collagen derivatives; collodion and agar-agar.

A preferred binder for the practice of the present invention is a polyvinylalcohol (PVA), a vinylalcohol copolymer or modified polyvinyl alcohol.

The filler may be chosen from the inorganic fillers well-known in the art such as silica, talc, clay, hydrotalcite, kaolin, diatomaceous earth, calcium carbonate, magnesium carbonate, basic magnesium carbonate, aluminosilicate, aluminum trihydroxide, aluminium oxide (alumina), titanium oxide, zinc oxide, barium sulphate, calcium sulphate, zinc sulphide, satin white, boehmite (alumina hydrate), zirconium oxide or mixed oxides.

In a preferred embodiment the filler is chosen from silica, aluminosilicate, alumina, calcium carbonate, alumina hydrate, and aluminium trihydroxide.

Mixtures of different fillers may also be used.

In an alternative embodiment the filler can be chosen from organic particles such as polystyrene, polymethyl methacrylate, silicones, melamine-formaldehyde condensation polymers, urea-formaldehyde condensation polymers, polyesters and polyamides. Mixtures of inorganic and organic fillers can be used. However, most preferably the filler is an inorganic filler.

The ink-receiving layer may further contain well-known conventional ingredients, such as a cationic substance acting as mordant, surfactants serving as coating aids, hardening agents, plasticizers, stabilizers, whitening agents and matting agents.

The different layers can be coated onto the support by any conventional coating technique, such as dip coating, knife coating, extrusion coating, spin coating, slide hopper coating and curtain coating.

Radiation curable ink-jet inks of a multi-density ink-jet ink set according to the present invention are suitable for use on substantially non-absorbing ink-receivers, e.g. a subbed or unsubbed polyethylene terephthalate support and a resin-coated paper, e.g. polyethylene-coated paper and polypropylene-coated paper. The ink-receiver can be transparent, translucent or opaque.

Suitable ink-receivers for use with radiation curable ink-jet inks of a multi-density ink-jet ink set according to the present invention are polymeric substrates, for example, cellulose acetate propionate, cellulose acetate butyrate, polyesters such as polyethylene terephthalate (PET) and polyethylene naphthalate (PEN); oriented polystyrene (OPS); oriented nylon (ONy); polypropylene (PP), oriented polypropylene (OPP); polyvinyl chloride (PVC); and various polyamides, polycarbonates, polyimides, polyolefins, poly(vinylacetals), polyethers and polysulfonamides, opaque white polyesters and extrusion blends of polyethylene terephthalate and polypropylene. Acrylic resins, phenol resins, glass and metals may also be used as an ink-receiver. Other suitable ink-receiver materials can be found in **HERBST, W, et al.** Industrial Organic Pigments, Production, Properties, Applications. 2nd edition. vch, 1997. Polyester film substrates and especially polyethylene terephthalate are preferred for certain applications particularly types with excellent dimensional stability. When such a polyester is used as the ink-receiver, a subbing layer may be employed to improve the bonding of the jetted ink layer to the substrate, if it constitutes together with the unsubbed substrate a substantially non-absorbing ink-receiver. Useful subbing layers for this purpose are well known in the photographic art and include, for example, polymers of vinylidene chloride such as vinylidene chloride /acrylonitrile /acrylic acid terpolymers or vinylidene chloride /methyl acrylate /itaconic acid terpolymers. Stabilizers, leveling additives, matting agents, adjusting agents for physical film properties such as waxes, may also be added to the subbing layer as required.

## EXAMPLE

The present invention will now be described in detail by way of an Example hereinafter. The example compares a multi-density ink-jet ink set having only one "black ink" with a multi-density ink-jet ink set having a "light black ink" and a "very light black ink".

## Materials

All materials used in the examples were readily available from standard commercial sources such as ALDRICH CHEMICAL Co. (Belgium) unless otherwise specified. The following materials were used:

Black dye is Duasyn Schwarz KRL-SF available from CLARIANT.

Yellow dye is Duasyn Yellow 3GF-SF available from CLARIANT.

Magenta dye is Duasyn Briljant Red F3b-SF available from CLARIANT.

Cyan dye is Duasyn Direct Turquoise Blue Koperftalocyanine available from CLARIANT.

Glycerol available from OLEON.

1,2-hexanediol available from DEGUSSA.

Proxel™ Ultra 5 available from AVECIA.

AgfaJet Grand Sherpa ink-jet inkset (CMYK + Light Cyan + Light Magenta) is available from AGFA.

AgfaJet Digital Proofing Base is a resin (PE)-coated photograde ink-jet ink-receiver from AGFA.

Measurement methods

1. Lightness L*

The lightness L* is measured on the ink diluted 1000 times with water. A 1cm quartz cell of the spectrophotometer Agilent 8453 (manufactured by AGILENT) is filled with the 1000-fold diluted ink.
The L*, a* and b* CIELAB-values are defined in ASTM Norm E179-90 in a R(45/0) geometry with evaluation according to ASTM Norm E308-90.
The lightness L* is in accordance with a light source D65 and a viewing angle of 2°.

2. Ink consumption

The ink consumption was measured by weighing each ink-jet ink cartridge before printing and after printing 42 m² of images. The ink consumption is expressed in mL/m².

3. Light-fastness

The light-fastness may be determined as the color hue shift $\Delta E$ between a print sample measured one hour after printing and the same print after x days of ambient office conditions. Printed samples were measured with a spectrophotometer DTP41 (from X-RITE) to determine the coordinates of the CieL*a*b* colour system of the colour difference indication method specified in CIE (Commission International de l'Eclairage). The measurement was carried out under conditions of light source D50, provision of no light source filter, absolute white as reference white, and angle of visibility 2°.
The colour hue change $\Delta E$ was determined by substituting the lightness values $L_1^*$ and the hue values $a_1^*$ and $b_1^*$ obtained for a fresh print sample measured one hour after printing for $L_1^*$, $a_1^*$ and $b_1^*$ and by substituting the lightness values $L_2^*$ and the hue values $a_2^*$ and $b_2^*$ obtained for the same print sample after x days of ambient office conditions for $L_2^*$ , $a_2^*$ and $b_2^*$ in the following equation:

$$\Delta E = \sqrt{(L_1{}^*\text{-}L_2{}^*)^2 + (a_1{}^*\text{-}a_2{}^*)^2 + (b_1{}^*\text{-}b_2{}^*)^2}$$

Criterion:

    1 = very fast (no transfer within 5 minutes)
    2 = fast (no transfer within 10 minutes)
    3 = slow (no transfer within 15 minutes)
    4 = very slow (no transfer within 20 minutes)

Preparation of the multi-density ink-jet ink sets

The ink composition was made by mixing under stirring glycerol, 1,2-hexanediol and part of the water. Then the dyes are added one after another. The biocide Proxel™ Ultra 5 was added. The pH was adjusted to pH 8.0. Water was added to make up the difference to 100%. The ink was filtered through a 1 µ Millipore™ filter.
The ink composition of Ink-LB and Ink-VLB is given by Table 1. The amount of each compound is expressed in wt% based on the total weight of the ink.

Table 1

| wt% of : | Ink-LB | Ink-VLB |
|---|---|---|
| Black dye | 2.70 | 0.68 |
| Yellow dye | 0.20 | 0.05 |
| Magenta dye | 0.20 | 0.05 |
| Cyan dye | 0.24 | 0.06 |
| Glycerol | 25.00 | 25.00 |

Table 1   (continued)

| wt% of : | Ink-LB | Ink-VLB |
|---|---|---|
| 1,2-hexanediol | 7.00 | 7.00 |
| Proxel™ Ultra 5 | 0.80 | 0.80 |
| water | To make 100% | To make 100% |

Two multi-density ink-jet ink sets were prepared according to Table 2 using the commercially available AgfaJet Grand Sherpa ink-jet inks and/or the prepared Ink-LB and Ink-VLB.

Table 2

| Ink type | COMP-1 | INV-1 |
|---|---|---|
| Magenta ink | AgfaJet Grand Sherpa M | AgfaJet Grand Sherpa M |
| Light Magenta ink | AgfaJet Grand Sherpa LM | AgfaJet Grand Sherpa LM |
| Cyan ink | AgfaJet Grand Sherpa C | AgfaJet Grand Sherpa C |
| Light Cyan ink | AgfaJet Grand Sherpa LC | AgfaJet Grand Sherpa LC |
| Yellow ink | AgfaJet Grand Sherpa Y | AgfaJet Grand Sherpa Y |
| Black ink | AgfaJet Grand Sherpa K | --- |
| Light Black ink | --- | Ink-LB |
| Very Light Black ink | --- | Ink-VLB |

The measured Lightness L*-value for the black inks are given in Table 3.

Table 3

| Ink | L* |
|---|---|
| Ink-LB | 51.98 |
| Ink-VLB | 84.55 |
| AgfaJet Grand Sherpa K | 17.47 |

Evaluation

The ink-cartridge of the multi-density ink-jet ink sets COMP-1 and INV-1 were placed into an AgfaJet Grand Grand Sherpa (available from AGFA). The printer model was adapted through a calibration step for each multi-density ink-jet ink set using the image processing software Apogee PDF RIP for Proofers 2.2 u1 b8 (available from AGFA) with as settings: print resolution: 720 x 720 dpi, quality mode: unidirectional printing, 4 passes; default ink split, default ICC profile, error diffusion ON.

A same set of images was printed with the multi-density ink-jet ink sets COMP-1 and INV-1. The ink-consumption is displayed in Table 4.

Table 4

| Ink | COMP-1 | | INV-1 | |
|---|---|---|---|---|
| | mL/m$^2$ | % | mL/m$^2$ | % |
| Cyan | 1.04 | 7.7 | 0.75 | 6.0 |
| Magenta | 1.76 | 13.1 | 1.08 | 8.7 |
| Yellow | 2.74 | 20.4 | 1.83 | 14.7 |
| Black | 0.98 | 7.3 | --- | --- |
| Light Black | --- | --- | 2.75 | 22.1 |

Table 4   (continued)

| Ink | COMP-1 | | INV-1 | |
|---|---|---|---|---|
| | mL/m$^2$ | % | mL/m$^2$ | % |
| Very Light Black | --- | --- | 3.18 | 25.6 |
| Light Cyan | 3.00 | 22.3 | 1.20 | 9.7 |
| Light Magenta | 3.92 | 29.2 | 1.64 | 13.2 |
| Total consumption | 13.44 | 100.0 | 12.43 | 100.0 |

From Table 4 it is clear that the ink-consumption of the inventive multi-density ink-jet ink set INV-1 is more than 9% lower than that of the comparative multi-density ink-jet ink set COMP-1. Furthermore, the amounts of colour inks used for printing the images are drastically reduced and replaced by the black inks. The inventive multi-density ink-jet ink set INV-1 uses more than 47% of black inks compared to only 7.3% in the comparative multi-density ink-jet ink set COMP-1.

The printed samples with multi-density ink-jet ink set INV-1 displayed a shorter drying time (no transfer within 5 minutes) than the samples printed with multi-density ink-jet ink set COMP-1 (no transfer within 20 minutes).

The light-fastness was determined on a printed sample with a grey scale range comprising 10%, 20%, 40% and 80% grey tones, which was exposed for 4 days to the ambient light conditions.

Table 5

| Neutral tone | ΔE for COMP-1 | ΔE for INV-1 |
|---|---|---|
| 10 % grey | 0.92 | 0.54 |
| 20% grey | 1.02 | 0.52 |
| 40% grey | 0.95 | 0.45 |
| 60% grey | 0.99 | 0.54 |
| 80% grey | 1.14 | 0.75 |

Contract proofing is a very demanding application towards stable prints. The human eye is especially sensitive to the neutrality of grey. A small shift to one colour (e.g. a yellowish grey) is not accepted for the contract proof. Table 5 shows that after only 4 days of ambient light conditions the samples printed with the comparative multi-density ink-jet ink set COMP-1 display colour hue shift ΔE-values larger than 1.0, which are clearly visible colour changes in neutral tone. All values for ΔE are smaller than 1.00 for samples printed with the inventive multi-density ink-jet ink set INV-1.

Having described in detail preferred embodiments of the current invention, it will now be apparent to those skilled in the art that numerous modifications can be made therein without departing from the scope of the invention as defined in the appending claims.

**Claims**

1.   A multi-density ink-jet ink set comprising two black ink compositions and at least three colour inks, wherein the first black ink composition has a lightness L* in the range of 35 to 65 as calculated from the spectral transmittance of a 1000-fold dilution of said first black ink composition, and the second black ink composition has an lightness L* value in the range of 70 to 100 as calculated from the spectral transmittance of a 1000-fold dilution of said second black ink composition.

2.   A multi-density ink-jet ink set according claim 1 comprises at least two multi-density cyan inks, two multi-density magenta inks and one yellow ink.

3.   A multi-density ink-jet ink set according claim 1 or 2 , wherein at least one ink-jet ink of said multi-density ink-jet ink set is radiation curable.

4.   A multi-density ink-jet ink set according claim 3, wherein at least one ink-jet ink of said multi-density ink-jet ink set contains a photo-initiator.

**5.** A method for ink-jet printing comprising the steps of:

    (a) providing a multi-density ink-jet ink set as defined by claim 1
    (b) jetting ink-jet inks of said multi-density ink-jet ink set on an ink-receiver

**6.** A method according to claim 5 wherein said multi-density ink-jet comprises tat least two multi-density cyan inks, two multi-density magenta inks and one yellow ink.

**7.** A method according to claim 5 or 6, wherein at least one ink-jet ink of said multi-density ink-jet ink set is radiation curable.

**8.** A multi-density ink-jet ink set according claim 7, wherein at least one ink-jet ink of said multi-density ink-jet ink set contains a photo-initiator.

**European Patent Office**

**EUROPEAN SEARCH REPORT**

Application Number

EP 05 10 2371

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 041 816 A (AGFA-GEVAERT) 4 October 2000 (2000-10-04) * page 8, line 8, paragraph 50 * ----- | 1-8 | C09D11/00 |
| A,D | EP 1 176 177 A (SEIKO EPSON CORPORATION) 30 January 2002 (2002-01-30) ----- | | |

|  |  |
|---|---|
| | TECHNICAL FIELDS SEARCHED (Int.Cl.7) |
| | C09D |

The present search report has been drawn up for all claims

| Place of search | Date of completion of the search | Examiner |
|---|---|---|
| Munich | 8 August 2005 | Lohner, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................
& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.** EP 05 10 2371

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2005

| Patent document cited in search report | | Publication date | Patent family member(s) | | Publication date |
|---|---|---|---|---|---|
| EP 1041816 | A | 04-10-2000 | EP | 1041816 A1 | 04-10-2000 |
| | | | DE | 69917589 D1 | 01-07-2004 |
| | | | DE | 69917589 T2 | 16-06-2005 |
| | | | EP | 1370068 A1 | 10-12-2003 |
| | | | EP | 1370069 A1 | 10-12-2003 |
| | | | JP | 2000301745 A | 31-10-2000 |
| | | | US | 6912065 B1 | 28-06-2005 |
| EP 1176177 | A | 30-01-2002 | EP | 1176177 A2 | 30-01-2002 |
| | | | JP | 3582724 B2 | 27-10-2004 |
| | | | JP | 2002121449 A | 23-04-2002 |
| | | | US | 2002051046 A1 | 02-05-2002 |

EPO FORM P0459

For more details about this annex : see Official Journal of the European Patent Office, No. 12/82